(19) Europäisches Patentamt
European Patent Office
Office européen des brevets

(11) **EP 2 657 016 A1**

(12) **EUROPEAN PATENT APPLICATION**
published in accordance with Art. 153(4) EPC

(43) Date of publication:
**30.10.2013 Bulletin 2013/44**

(51) Int Cl.:
**B32B 27/30** (2006.01)          **B32B 27/36** (2006.01)
**B65D 65/40** (2006.01)

(21) Application number: **11851298.7**

(22) Date of filing: **21.12.2011**

(86) International application number:
**PCT/JP2011/079677**

(87) International publication number:
**WO 2012/086704 (28.06.2012 Gazette 2012/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010 JP 2010286440**

(71) Applicant: Gunze Limited
**Ayabe-shi, Kyoto 623-8511 (JP)**

(72) Inventors:
• **ISHIKAWA Kiyoyasu
Moriyama-shi
Shiga 524-8501 (JP)**

• **MARUICHI Naoyuki
Moriyama-shi
Shiga 524-8501 (JP)**

(74) Representative: **Albrecht, Thomas
Kraus & Weisert
Patent- und Rechtsanwälte
Thomas-Wimmer-Ring 15
80539 München (DE)**

(54) **HEAT SHRINKABLE MULTILAYER FILM AND HEAT SHRINKABLE LABEL**

(57)    The present invention provides a heat shrinkable multilayer film excellent in crease-whitening resistance and perforation aptness as well as excellent in low-temperature shrinkability. The present invention also provides a heat shrinkable label formed from the heat shrinkable multilayer film. The heat shrinkable multilayer film of the present invention includes: front and back layers each containing a polyester resin; an interlayer containing a polystyrene copolymer; and adhesive layers each containing 60 to 85% by weight of a polyester resin and 15 to 40% by weight of a polystyrene copolymer. The front and back layers and the interlayer are stacked with the adhesive layers interposed therebetween. The multilayer film has a tensile elongation at break of 30% or higher in the main shrinkage direction.

[Fig. 5]

**Description**

TECHNICAL FIELD

The present invention relates to a heat shrinkable multilayer film excellent in crease-whitening resistance and perforation aptness as well as excellent in low-temperature shrinkability. The present invention also relates to a heat shrinkable label formed from the heat shrinkable multilayer film.

BACKGROUND ART

Heat shrinkable labels, which are prepared by printing images on a base film made of heat shrinkable resin, are attached to various containers such as PET bottles and metal cans these days.
Heat shrinkable resin films mainly used for heat shrinkable labels are polystyrene copolymer films because of their excellent low-temperature shrinkability. On the other hand, the polystyrene copolymer films have insufficient heat resistance. Thus, in some cases, heat shrinkable labels shrink to bend or break when PET bottles with the heat shrinkable labels attached thereon fall down in a warmer that is placed in a convenience store, for example. Further, the polystyrene copolymer films have insufficient solvent resistance. Thus, in some cases, the heat shrinkable labels attached to containers for oil-containing products shrink or are dissolved due to oil staining.

Such situations raise an attempt to use polyester resin films that are excellent in heat resistance and solvent resistance in place of the polystyrene copolymer films. However, the polyester resin film is poor in low-temperature shrinkability and abruptly shrinks. This easily causes a heat shrinkable label to suffer creases upon attaching the label to a container. Many heat shrinkable labels have perforations so as to be easily peeled off from containers after use for container recycle, but the polyester resin films are difficult to tear along the perforations. Thus, the heat shrinkable label may not be easily peeled off from the container. In addition, the polyester resin film has a high shrinkage stress. This causes a heat shrinkable label to tighten a container due to heat when the label is used as a label for hot drink for sale. Thus, the level of the contained liquid rises and the content leaks from the container, for example.

In order to solve these problems, the present applicants have devised a heat shrinkable multilayer film that includes outer layers each containing a polyester resin, an interlayer containing a polystyrene copolymer, and adhesive layers each containing a modified-polyester elastomer, where the outer layers and the interlayer are stacked with the adhesive layers interposed therebetween. They have disclosed this film in Patent Literature 1.
Because the heat shrinkable multilayer film disclosed in Patent Literature 1 is designed such that the interlayer containing a polystyrene copolymer is covered with the outer layers each containing a polyester resin, the film is excellent in heat resistance, oil resistance, and its appearance, and is easily torn along the perforations. Also because the heat shrinkable multilayer film disclosed in Patent Literature 1 has the adhesive layers between the respective outer layers and the interlayer, the film can be used as a heat shrinkable label for a container to prevent delamination upon attachment and to prevent reduction in the interlaminar strength after printing.

Such a heat shrinkable multilayer film formed by lamination of layers including adhesive layers may disadvantageously suffer whitening at crease portions after the film is strongly folded under certain conditions in the step of solvent-sealing for producing a label. Such whitened portions do not disappear and remain conspicuous to spoil the appearance when the label is attached to a container such as a PET bottle.

Patent Literature 2 discloses a foam laminate including a foamed sheet made of a polystyrene resin, and a film of an aromatic polyester resin stacked on one side of the foamed sheet with an adhesive layer interposed therebetween, the adhesive layer being made of a mixture of a polystyrene resin and a polyester resin.
Disadvantageously, such a foamed laminate causes a film to break in the stretching step for giving shrinkability, and thus the productivity is poor.

CITATION LIST

- Patent Literature

Patent Literature 1: Japanese Kokai Publication No. 2008-62640 (JP-A 2008-62640)
Patent Literature 2: Japanese Kokai Publication No. 2001-30439 (JP-A 2001-30439)

SUMMARY OF INVENTION

- Technical Problem

The present invention aims to provide a heat shrinkable multilayer film excellent in crease-whitening resistance and perforation aptness as well as excellent in low-temperature shrinkability. The present invention also aims to provide a heat shrinkable label formed from the heat shrinkable multilayer film.

The present invention further aims to provide a heat shrinkable label that is capable of preventing poor appearance of a solvent-sealed portion due to wear or impact during transportation, and preventing poor appearance due to delamination by scratching (e.g. with a nail) the portion where parts of the film overlap with each other as a result of solvent-sealing.

- Solution to Problem

The present invention relates to a heat shrinkable multilayer film comprising front and back layers each containing a polyester resin, an interlayer containing a polystyrene copolymer, and adhesive layers each containing 60 to 85% by weight of a polyester resin and 15 to 40% by weight of a polystyrene copolymer, wherein the front and back layers and the interlayer are stacked with the adhesive layers interposed therebetween, and the multilayer film has a tensile elongation at break of 30% or higher in the main shrinkage direction.

The present invention will be described in detail below.

The present inventors have found that a heat shrinkable multilayer film excellent in crease-whitening resistance and perforation aptness as well as excellent in low-temperature shrinkability can be favorably obtained by the use of a mixed resin of a polyester resin and a polystyrene copolymer at a ratio within a predetermined range for adhesive layers in a heat shrinkable multilayer film that has front and back layers each containing a polyester resin, an interlayer containing a polystyrene copolymer, and adhesive layers interposed therebetween. As a result, the present inventors have completed the present invention.

The heat shrinkable multilayer film of the present invention has front and back layers and an interlayer.

The front and back layers herein means both the front layer and the back layer. Thus, the heat shrinkable multilayer film of the present invention is designed such that the interlayer is sandwiched between the front layer and the back layer.

The front and back layers each contain a polyester resin.

Examples of the polyester resin include those obtainable by polycondensation of a dicarboxylic acid and a diol.

The dicarboxylic acid is not particularly limited. Examples thereof include o-phthalic acid, terephthalic acid, isophthalic acid, succinic acid, adipic acid, sebacic acid, azelaic acid, octylsuccinic acid, cyclohexane dicarboxylic acids, naphthalene dicarboxylic acids, fumaric acid, maleic acid, itaconic acid, and decamethylene carboxylic acids, and anhydrides thereof and lower alkyl esters thereof.

The diol is not particularly limited. Examples thereof include aliphatic diols such as ethylene glycol, 1, 3-propanediol, 1, 4-butanediol, diethylene glycol, 1, 5-pentanediol, 1, 6-hexanediol, dipropylene glycol, triethylene glycol, tetraethylene glycol, 1, 2-propanediol, 1, 3-butanediol, 2, 3-butanediol, neopentyl glycol(2, 2-dimethylpropane-1, 3-diol), 1, 2-hexanediol, 2, 5-hexanediol, 2-methyl-2, 4-pentanediol, 3-methyl-1, 3-pentanediol, and 2-ethyl-1, 3-hexanediol; and alicyclic diols such as 2, 2-bis(4-hydroxycyclohexyl) propane, alkylene oxide adducts of 2, 2-bis(4-hydroxycyclohexyl) propane, 1, 4-cyclohexane diol, and 1, 4-cyclohexane dimethanol.

Preferably, the polyester resin contains a component derived from terephthalic acid as the dicarboxylic acid component, and a component derived from at least one of ethylene glycol and 1, 4-cyclohexane dimethanol as the diol component. Such a polyester resin gives excellent low-temperature resistance and heat resistance. For better low-temperature resistance and heat resistance, preferably, the amount of the component derived from ethylene glycol is 60 to 80 mol% and the amount of the component derived from 1, 4-cyclohexane dimethanol is 10 to 40 mol%. Such a polyester resin may optionally further contain a component derived from diethylene glycol in an amount of 0 to 30 mol%, preferably 1 to 25 mol%, and more preferably 2 to 20 mol%. Diethylene glycol increases the tensile elongation at break in the main shrinkage direction, gives excellent perforation aptness, and prevents delamination of a heat shrinkable label when it is peeled off from a container, that is, prevents the front and back layers inside the label from remaining. More than 30 mol% of diethylene glycol may cause excessive low-temperature shrinkability. This causes a heat shrinkable label to easily suffer creases when it is attached to a container.

The polyester resin in the front and back layers may be a single polyester resin with the aforementioned composition, or may be combination of two or more polyester resins each with the aforementioned composition. Further, the polyester resins in the front layer and the back layer may have different compositions. Nevertheless, they preferably have the same composition so as to prevent troubles such as curling of a film.

The polyester resin preferably has a Vicat softening temperature of not lower than 55°C but not higher than 95°C. A Vicat softening temperature of lower than 55°C may cause excessive low-temperature shrinkability, and this may result in creases on a heat shrinkable label when the label is attached to a container. A Vicat softening temperature of higher than 95°C may cause poor low-temperature shrinkability. The lower limit of this temperature is more preferably 60°C and the upper limit thereof is more preferably 90°C. The Vicat softening temperature can be measured by a method in accordance with JIS-K7206 (1999).

The interlayer contains a polystyrene copolymer.

Examples of the polystyrene copolymer include any aromatic vinyl hydrocarbon-conjugated diene copolymers, any mixed resins of an aromatic vinyl hydrocarbon-conjugated diene copolymer and an aromatic vinyl hydrocarbon-unsaturated aliphatic carboxylate copolymer, and any rubber-modified high impact polystyrene. The polystyrene copolymer allows a heat shrinkable multilayer film to start shrinking at low temperature and to have high shrinkability.

The aromatic vinyl hydrocarbon-conjugated diene copolymer herein means a copolymer containing a component derived from an aromatic vinyl hydrocarbon and a component derived from a conjugated diene.

The aromatic vinyl hydrocarbon is not particularly limited, and examples thereof include styrene, o-methylstyrene, and p-methylstyrene. These may be used alone or in combination. The conjugated diene is not particularly limited, and examples thereof include 1, 3-butadiene, 2-methyl-1, 3-butadiene, 2, 3-dimethyl-1, 3-butadiene, 1, 3-pentadiene, and 1, 3-hexadiene. These may be used alone or in combination.

The aromatic vinyl hydrocarbon-conjugated diene preferably contains a styrene-butadiene copolymer (SBS resin) for particularly excellent heat shrinkability. Further, the aromatic vinyl hydrocarbon-conjugated diene copolymer preferably contains a copolymer prepared using 2-methyl-1, 3-butadiene (isoprene), such as a styrene-isoprene copolymer (SIS resin) or a styrene-isoprene-butadiene copolymer (SIBS), as the conjugated diene for production of a heat shrinkable multilayer film with less fish eyes.

The aromatic vinyl hydrocarbon-conjugated diene copolymer may contain any one of SBS resin, SIS resin, and SIBS resin alone, or may contain a plurality of them in combination. In the case of using two or more of SBS resin, SIS resin, and SIBS resin, the resins may be dry-blended with each other, or the respective resins with predetermined compositions may be knead-pelletized through an extruder and the obtained compound resin may be used.

An aromatic vinyl hydrocarbon-conjugated diene copolymer containing one or more of SBS resin, SIS resin, and SIBS resin preferably satisfies the following conditions: that is, the styrene content is 65 to 90% by weight and the conjugated diene content is 10 to 35% by weight in 100% by weight of the aromatic vinyl hydrocarbon-conjugated diene copolymer. This enables to provide a heat shrinkable multilayer film with particularly excellent heat shrinkability. A styrene content of more than 90% by weight or a conjugated diene content of less than 10% by weight may cause a heat shrinkable multilayer film to easily break due to a tension or may cause it to unexpectedly break during processes such as printing. A styrene content of less than 65% by weight or a conjugated diene content of more than 35% by weight may cause impurities such as gel to generate during a molding process or may cause a heat shrinkable multilayer film to have poor strength, likely resulting in poor handleability.

The aromatic vinyl hydrocarbon-unsaturated aliphatic carboxylate copolymer herein means a copolymer containing a component derived from an aromatic vinyl hydrocarbon and a component derived from an unsaturated aliphatic carboxylate.

The aromatic vinyl hydrocarbon is not particularly limited, and may be the same aromatic vinyl hydrocarbon as that used for the aromatic vinyl hydrocarbon-conjugated diene copolymer.

The unsaturated aliphatic carboxylate is not particularly limited, and examples thereof include methyl (meth) acrylate, butyl (meth) acrylate, 2-ethylhexyl (meth) acrylate, lauryl (meth) acrylate, and stearyl (meth) acrylate. The term "(meth) acrylate" includes both acrylate and methacrylate.

In the case where the aromatic vinyl hydrocarbon-unsaturated aliphatic carboxylate copolymer is a styrene-butyl acrylate copolymer, the styrene content is preferably 60 to 90% by weight and the butyl acrylate content is preferably 10 to 40% by weight in 100% by weight of the styrene-butyl acrylate copolymer. An aromatic vinyl hydrocarbon-unsaturated aliphatic carboxylate copolymer with such a composition enables to provide a heat shrinkable multilayer film with excellent heat shrinkability.

No particular limitation exists in the mixed resin of the aromatic vinyl hydrocarbon-conjugated diene copolymer and the aromatic vinyl hydrocarbon-unsaturated aliphatic carboxylate copolymer. The mixed resin is preferably one containing 20 to 80% by weight of the aromatic vinyl hydrocarbon-conjugated diene copolymer and 20 to 80% by weight of the aromatic vinyl hydrocarbon-unsaturated aliphatic carboxylate copolymer.

The rubber-modified high impact polystyrene is one mainly having a continuous phase of a styrene-alkyl methacrylate-alkyl acrylate terpolymer and a dispersed phase of a conjugated-diene-based rubber component. Examples of the alkyl methacrylate constituting the continuous phase include methyl methacrylate and ethyl methacrylate. Examples of the alkyl acrylate include methyl acrylate, ethyl acrylate, propyl acrylate, and butyl acrylate.

The proportion of styrene in the terpolymer constituting the continuous phase is preferably 20 to 80% by weight, and more preferably 30 to 70% by weight. The proportion of an alkyl methacrylate is preferably 10 to 50% by weight, and more preferably 15 to 40% by weight. The proportion of an alkyl acrylate is preferably 1 to 30% by weight, and more preferably 5 to 20% by weight. The conjugated-diene-based rubber component constituting the dispersed phase is preferably polybutadiene or a styrene-butadiene copolymer containing 5 to 30% by weight of styrene.

The conjugated-diene-based rubber component in the dispersed phase preferably has a particle size of 0.1 to 1.2 $\mu$m, and more preferably 0.3 to 0.8 $\mu$m. A dispersed phase with a particle size of smaller than 0.1 $\mu$m may cause insufficient impact resistance, whereas a dispersed phase with a particle size of greater than 1.2 $\mu$m may cause poor transparency of the interlayer.

Preferably, the proportion of the continuous phase composed of the terpolymer of styrene-alkyl methacrylate-alkyl acrylate is 70 to 95% by weight and the proportion of the dispersed phase composed of the conjugated-diene-based rubber component is 5 to 20% by weight. A dispersed phase at the proportion of less than 5% by weight may cause insufficient impact resistance, whereas a dispersed phase at the proportion of more than 20% by weight may cause poor transparency of the interlayer.

The Vicat softening temperature of the polystyrene copolymer is preferably not lower than 60°C but preferably not higher than 85°C. A copolymer with a Vicat softening temperature of lower than 60°C may cause a heat shrinkable label to have too excellent low-temperature shrinkability, and thus the label may easily suffer creases when it is attached to a container. A copolymer with a Vicat softening temperature of higher than 85°C may cause a heat shrinkable label to have poor low-temperature shrinkability, and thus the label may easily have non-shrinking portion when it is attached to a container. The Vicat softening temperature is more preferably not lower than 65°C but more preferably not higher than 80°C. The Vicat softening temperature can be measured by a method in accordance with JIS-K7206 (1999).

A styrene elastomer or a modified product thereof may be added as the polystyrene copolymer for the interlayer. Such an elastomer or a modified product thereof increases the tensile elongation at break in the main shrinkage direction, improves the perforation aptness, and prevents delamination of a heat shrinkable label and remaining of the front and back layers inside the label when the label is peeled off from a container.

The styrene elastomer is not particularly limited. Examples thereof include styrene elastomers each of which contain polystyrene as a hard segment and polybutadiene, polyisoprene, or a polybutadiene-polyisoprene copolymer as a soft segment; and hydrogenated products thereof. The hydrogenated products may be partially hydrogenated polybutadiene, polyisoprene, and the like, or may be completely hydrogenated ones.

The modified product of a styrene elastomer is not particularly limited. Examples thereof include styrene elastomers modified with any of functional groups such as a carboxylic group, an acid anhydride group, an amino group, an epoxy group, and a hydroxyl group.

The amount of the functional group such as a carboxylic group, an acid anhydride group, an amino group, an epoxy group, or a hydroxyl group in the modified product of the styrene elastomer is not particularly limited, and the amount thereof is preferably not less than 0.05% by weight, whereas preferably not more than 5.0% by weight. Less than 0.05% by weight of a functional group may cause an adhesive layer to have insufficient adhesion particularly to the front and back layers. More than 5.0% by weight of a functional group may cause a styrene elastomer to heat-deteriorate when the functional group is added thereto, likely resulting in occurrence of impurities such as gel. The amount of the functional group is more preferably not less than 0.1% by weight, whereas more preferably not more than 3.0% by weight.

The polystyrene copolymer in the present invention means one in which the amount of the polystyrene-based component as the hard segment is more than that of the other soft segment components based on the proportion in percent by weight. The styrene elastomer herein means one in which the amount of the styrene-based component as the hard segment is less than that of the other soft segment components based on the proportion in percent by weight.

Examples of commercially available products of the styrene elastomers and modified products thereof include Tuftec and Tufprene (both produced by Asahi Kasei Chemicals Corp.), Kraton (kraton polymers), DYNARON, JSR TR, and JSR SIS (JSR Corp.), and SEPTON (KURARAY CO., LTD.).

The heat shrinkable multilayer film of the present invention is designed such that the respective front and back layers and the interlayer are stacked while sandwiching adhesive layers each containing 60 to 85% by weight of a polyester resin and 15 to 40% by weight of a polystyrene copolymer.

Such adhesive layers enable to provide a heat shrinkable multilayer film excellent in crease-whitening resistance and perforation aptness as well as excellent in low-temperature shrinkability.

The polyester resin used for the adhesive layers may be the same polyester resin as that used for the front and back layers, or may be a different one. The specification thereof is as described above in the explanation of the polyester resin used for the front and back layers.

The polyester resin used for the adhesive layers is particularly preferably one containing a component derived from terephthalic acid as the dicarboxylic acid component and a component derived from at least one of ethylene glycol and 1,4-cyclohexane dimethanol as the diol component. Such a polyester resin may further contain 0 to 30 mol%, preferably 1 to 25 mol%, and more preferably 2 to 20 mol% of a component derived from diethylene glycol.

The polyester resin used for the adhesive layers preferably has a Vicat softening temperature of not lower than 50°C but not higher than 95°C. A Vicat softening temperature of lower than 50°C may be likely to cause a heat shrinkable label to suffer delamination when the label is attached by heating. A Vicat softening temperature of higher than 95°C may cause reduction in interlaminar strength. The temperature is more preferably not lower than 55°C, and still more preferably not lower than 60°C, whereas it is more preferably not higher than 90°C.

The Vicat softening temperature can be measured by a method in accordance with JIS-K7206 (1999).

The amount of the polyester resin in each adhesive layer is not less than 60% by weight but not more than 85% by weight.

Less than 60% by weight of the polyester resin deteriorates the perforation aptness and causes a heat shrinkable label to suffer delamination and remaining of the front and back layers inside the label when the label is peeled off from a container. Further, delamination easily occurs when the center-sealed overlapping portion is scratched after the label attachment. More than 85% by weight of the polyester resin decreases the interlaminar strength, as well as deteriorates the perforation aptness. Further, a heat shrinkable label may suffer delamination and remaining of the front and back layers inside the label when the label is peeled off from a container. In addition, delamination easily occurs when the center-sealed overlapping portion is scratched after the label attachment.

The amount of the polyester resin is preferably not less than 65% by weight but not more than 80% by weight.

The polystyrene copolymer used for the adhesive layers may be the same polystyrene copolymer as that used for the interlayer, or may be a different one. The specifications thereof are as described in the explanation of the polystyrene copolymer used for the aforementioned interlayer.

Examples of the polystyrene copolymer used for the adhesive layers include any aromatic vinyl hydrocarbon-conjugated diene copolymers, any mixed resins of an aromatic vinyl hydrocarbon-conjugated diene copolymer and an aromatic vinyl hydrocarbon-unsaturated aliphatic carboxylate copolymer, and any rubber-modified high impact polystyrene. Preferable among these are styrene-conjugated diene copolymers, and more preferable are styrene-butadiene copolymers. Any of styrene elastomers and modified products thereof are also preferred.

In the case where the polystyrene copolymer used for the adhesive layers is a styrene-conjugated diene copolymer, the styrene content and the conjugated diene content are preferably 55 to 90% by weight and 10 to 45% by weight, respectively, in 100% by weight of the styrene-conjugated diene copolymer. A styrene content of more than 90% by weight or a conjugated diene content of less than 10% by weight may deteriorate the interlaminar strength, as well as deteriorate the perforation aptness. Thereby, a heat shrinkable label may suffer delamination and remaining of the front and back layers inside the label when it is peeled off from a container. Further, delamination may easily occur when the center-sealed overlapping portion is scratched after the label attachment. A styrene content of less than 55% by weight or a conjugated diene content of more than 45% by weight may deteriorate the perforation aptness. Thereby, a heat shrinkable label may suffer delamination and remaining of the front and back layers inside the label when it is peeled off from a container. Further, delamination may easily occur when the center-sealed overlapping portion is scratched after the label attachment.

The Vicat softening temperature of the polystyrene copolymer used for the adhesive layers is preferably not lower than 60°C but not higher than 85°C. A Vicat softening temperature of lower than 60°C may easily cause delamination when the center-sealed overlapping portion is scratched after the label attachment. A Vicat softening temperature of higher than 85°C may deteriorate the interlaminar strength. The temperature is more preferably not lower than 65°C but not higher than 80°C. The Vicat softening temperature can be measured by a method in accordance with JIS-K7206 (1999).

A higher Vicat softening temperature of the polystyrene copolymer used for the adhesive layers than that of the polystyrene copolymer for the interlayer may enable to suppress delamination when the center-sealed overlapping portion is scratched after the label attachment. A lower Vicat softening temperature of the polystyrene copolymer used for the adhesive layers than that of the polystyrene copolymer for the interlayer may provide a higher interlaminar strength.

The adhesive layers each have a polyester resin content of not less than 60% by weight but not more than 85% by weight, and have a polystyrene copolymer content of not less than 15% by weight but not more than 40% by weight. A polyester resin content of less than 60% by weight or a polystyrene copolymer content of more than 40% by weight deteriorates the perforation aptness. Thereby, a heat shrinkable label may suffer delamination and remaining of the front and back layers inside the label when it is peeled off from a container. Further, delamination easily occurs when the center-sealed overlapping portion is scratched after the label attachment. A polyester resin content of more than 85% by weight or a polystyrene copolymer content of less than 15% by weight deteriorates the interlaminar strength as well as the perforation aptness. Thereby, a heat shrinkable label may suffer delamination and remaining of the front and back layers inside the label when it is peeled off from a container. Further, delamination easily occurs when the center-sealed overlapping portion is scratched after the label attachment.

The polyester resin content is preferably not less than 65% by weight but not more than 80% by weight. The polystyrene copolymer content is preferably not less than 20% by weight but not more than 35% by weight.

The heat shrinkable multilayer film of the present invention may optionally contain any of additives such as antioxidants, heat stabilizers, ultraviolet absorbers, photostabilizers, lubricants, antistatic agents, antiblocking agents, flame retardants, antibacterial agents, fluorescent brightners, and coloring agents.

The whole heat shrinkable multilayer film of the present invention is preferably not less than 15 um but not more than 100 $\mu$m in thickness. The thickness is more preferably not less than 20 $\mu$m but not more than 80 $\mu$m, and is still more preferably not less than 25 $\mu$m but not more than 70 $\mu$m. A heat shrinkable multilayer film with the whole thickness within the above range can have excellent heat shrinkability, excellent converting properties (e.g. printing properties, center-sealing properties), and excellent attachability.

The thicknesses of the front and back layers each are preferably not lower than 5% but not higher than 25% the thickness of the whole heat shrinkable multilayer film of the present invention. The thickness of the interlayer is preferably not lower than 50% but not higher than 90% the thickness of the whole heat shrinkable multilayer film of the present invention.

Front and back layers and an interlayer each with the thickness within the above range enable to provide a heat shrinkable multilayer film having crease-whitening resistance and perforation aptness, as well as excellent low-temperature shrinkability.

The adhesive layers each are preferably not less than 0.5 $\mu$m but not more than 3.0 $\mu$m in thickness in the heat shrinkable multilayer film of the present invention. An adhesive layer with a thickness of less than 0.5 $\mu$m may fail to exert sufficient adhesiveness. An adhesive layer with a thickness of more than 3.0 $\mu$m may cause a heat shrinkable multilayer film to have poor heat shrinkability and optical properties. The thickness of the adhesive layer is more preferably not less than 0.7 $\mu$m but not more than 2.0 $\mu$m.

In the case where the heat shrinkable multilayer film of the present invention has the adhesive layers, the whole thickness of the heat shrinkable multilayer film can be adjusted by subtracting the thicknesses of the adhesive layers from the whole thickness and forming the front and back layers and the interlayer.

In the case where the heat shrinkable multilayer film of the present invention has a five-layer structure of front layer (A) /adhesive layer (E) /interlayer (B) /adhesive layer (E) /back layer (C) and the whole heat shrinkable multilayer film is 40 $\mu$m in thickness, the front layer (A) is preferably 2.0 to 10.0 $\mu$m, and more preferably 3.0 to 8.0 $\mu$m in thickness. The adhesive layer (E) is preferably 0.5 to 3.0 $\mu$m, and more preferably 0.7 to 2.0 $\mu$m in thickness. The interlayer (B) is preferably 19.0 to 35.0$\mu$ m, and more preferably 20 to 32.6 $\mu$m in thickness. The back layer (C) is preferably 2.0 to 10.0 $\mu$m, and more preferably 3.0 to 8.0 $\mu$m in thickness.

The heat shrinkable multilayer film of the present invention has a shrinkage rate in the main shrinkage direction of 15 to 50%, preferably 20 to 45%, more preferably 25 to 40%, and still more preferably 30 to 40%, at 70°C for 10 seconds; 50 to 70%, preferably 55 to 67%, more preferably 58 to 65%, and still more preferably 60 to 65%, at 80°C for 10 seconds; and 65 to 85%, preferably 70 to 83%, and more preferably 75 to 80%, in boiled water for 10 seconds. Such a shrinkage rate enables to provide excellent perforation aptness.

The heat shrinkable multilayer film of the present invention preferably has an interlaminar strength of 40 g/cm or higher. An interlaminar strength of lower than 40 g/cm may cause a heat shrinkable label to suffer delamination and remaining of the front and back layers inside the label when the label is peeled off from a container. Further, delamination may easily occur when the center-sealed overlapping portion is scratched after the label attachment.

The interlaminar strength is preferably not lower than 50 g/cm.

The interlaminar strength may be measured as follows: that is, the layers of a measurement sample are separated in the 180-degree direction and the interlaminar strength at this time is measured using a peel tester.

The heat shrinkable multilayer film of the present invention has a tensile elongation at break in the main shrinkage direction of 30% or higher.

A tensile elongation at break of lower than 30% causes a heat shrinkable label to suffer delamination and remaining of the front and back layers inside the label when the label is peeled off from a container. Further, delamination easily occurs when the center-sealed overlapping portion is scratched after the label attachment.

The tensile elongation at break is preferably not lower than 35%, and more preferably not lower than 40%. The tensile elongation at break in the main shrinkage direction is preferably not higher than 100%.

A tensile elongation at break of higher than 100% may suppress molecular orientation and the rigidity of the heat shrinkable label tends to be low. Thus, the label may easily suffer troubles when it is attached.

The tensile elongation at break can be measured using a Strograph VE1D (Toyo Seiki Seisaku-sho, Ltd.) at a sample width of 10 mm, a gauge length of 40 mm, and a tensile speed of 200 mm/min in accordance with JIS-K6732.

The tensile elongation at break in the main shrinkage direction can be adjusted to 30 to 100% by, for example, adjusting the stretch ratio and the stretching temperature for film formation, by adjusting the Vicat softening temperature of the polyester resin used for the front and back layers, or by adjusting the Vicat softening temperature of the polystyrene resin used for the interlayer.

The heat shrinkable multilayer film of the present invention may be produced by any method, and is preferably produced by a method of co-extruding the layers at the same time. In the case of co-extrusion with a T-die, the layers may be stacked by a feed block technique, a multi-manifold technique, or combination use thereof.

Examples of a specific method for producing the heat shrinkable multilayer film of the present invention include the following method. That is, the material for the front and back layers, the material for the interlayer, and the material for the adhesive layers are charged into an extruder; the materials are extruded into a sheet through a multilayer die; the sheet is cooled and solidified by take-up rolls; and the sheet is uniaxially or biaxially stretched.

The sheet may be stretched by, for example, a roll stretching method, a tenter stretching method, or combination thereof.

The stretching temperature depends on the softening temperature of a resin constituting the film and required shrinkage properties of the heat shrinkable multilayer film. The stretching temperature is preferably not lower than 65°C but not higher than 120°C, and more preferably not lower than 70°C but not higher than 115°C. The stretch ratio in the main shrinkage direction depends on the components of the film, the method of stretching the film, and the stretching temperature, and the ratio is three or more times, preferably four or more times, whereas seven or less times, preferably six or less times.

Such a stretching temperature and stretch ratio enable to achieve excellent thickness accuracy and perforation aptness.

The usage of the heat shrinkable multilayer film of the present invention is not particularly limited. Since the heat shrinkable multilayer film of the present invention is excellent in wear resistance, the heat shrinkable multilayer film may be suitably used as a base film for heat shrinkable labels attached to containers such as PET bottles and metal cans. A heat shrinkable label formed from the heat shrinkable multilayer film of the present invention is also one aspect of the present invention.

- Advantageous Effects of Invention

The present invention can provide a heat shrinkable multilayer film excellent in crease-whitening resistance and perforation aptness as well as excellent in low-temperature shrinkability. The present invention also provides a heat shrinkable label formed from the heat shrinkable multilayer film.

BRIEF DESCRIPTION OF THE DRAWINGS

Fig. 1 is a schematic view showing a state of separating a film in evaluation of interlaminar strength.
Fig. 2 is a schematic view showing another state of separating a film in evaluation of interlaminar strength.
Fig. 3 is a photograph showing one example where no crease-whitening is observed in evaluation of crease-whitening.
Fig. 4 is a photograph showing one example where crease-whitening is observed in evaluation of crease-whitening.
Fig. 5 is a schematic view showing an operation in a scratch test.
Fig. 6 is a schematic view showing an operation in evaluation of perforation aptness.

DESCRIPTION OF EMBODIMENTS

The following will describe embodiments of the present invention in detail referring to examples, but the present invention is not limited to these examples.

The materials used in the respective examples and comparative examples are listed below.

(Polyester resin)

Polyester resins (polyester: PEs-1 to PEs-4) having the compositions shown in Table 1 were used.
Table 1 also shows the Vicat softening temperature (°C) of each polyester resin.
The Vicat softening temperature was measured as follows in accordance with JIS-K7206 (1999). That is, a sample was collected from each polystyrene copolymer; a needle indenter was placed on the sample and the sample was heated at a rate of 120°C/h while a load of 10 N was applied to the sample; and the temperature when the needle indenter entered 1 mm was measured.

(Polystyrene copolymer)

Polystyrene copolymers (styrene-butadiene copolymer: SBS-1 to SBS-6) having the compositions shown in Table 1 were used.
Table 1 also shows the Vicat softening temperature (°C) and MFR (g/10 min) of each polystyrene copolymer.
The Vicat softening temperature was measured as follows in accordance with JIS-K7206 (1999). That is, a sample was collected from each polystyrene copolymer; a needle indenter was placed on the sample and the sample was heated at a rate of 120°C/h while a load of 10 N was applied to the sample; and the temperature when the needle indenter entered 1 mm was measured.
The MFR was measured as follows in accordance with ISO 1133. That is, each polystyrene copolymer was molten at 200°C and the amount of resin ejected at a load of 5 kg for each 10 minutes was measured.

(Polystyrene resin)

A polystyrene resin (PS-1) having the composition shown in Table 1 was used.
Table 1 also shows the Vicat softening temperature (°C) and the MFR (g/10 min) of the polystyrene resin.
The Vicat softening temperature was measured as follows in accordance with JIS-K7206 (1999). That is, a sample was collected from the polystyrene resin; a needle indenter was placed on the sample and the sample was heated at a rate of 120°C/h while a load of 10 N was applied to the sample; and the temperature when the needle indenter entered 1 mm was measured.
The MFR was measured as follows in accordance with ISO 1133. That is, the polystyrene resin was molten at 200°C and the amount of resin ejected at a load of 5 kg for each 10 minutes was measured.

(Thermoplastic elastomer)

The following thermoplastic elastomers shown in Table 1 were used.

TPE-1: polyester elastomer, PRIMALLOY A1600N (Mitsubishi Chemical Corp.)
TPE-2: hydrogenated styrene thermoplastic elastomer, Tuftec M1911 (Asahi Kasei Chemicals Corp.)
TPE-3: styrene elastomer, Tufprene 126 (Asahi Kasei Chemicals Corp.)
TPE-4: hydrogenated styrene elastomer, H1041 (Asahi Kasei Chemicals Corp.)
TPE-5: hydrogenated styrene elastomer, H1043 (Asahi Kasei Chemicals Corp.)

(Example 1)

PEs-1 was used as a resin for the front and back layers; SBS-1 was used as a resin for the interlayer; and PEs-1 and SBS-4 were used as resins for the adhesive layers. The amounts of the resins were as shown in Table 2. These resins were charged into an extruder with a barrel temperature of 160 to 250°C and they were extruded through a 250°C multilayer die into a five-layer sheet shape. The sheet was cooled and solidified by take-up rolls at 30°C. Then, the sheet was stretched at a stretch ratio of six times in a tenter stretching machine having a preheating zone (105°C), a stretching zone (90°C), and a heat-setting zone (85°C), and the sheet was wound by a winder. This yielded a heat shrinkable multilayer film where the main shrinkage direction was TD and the direction perpendicular to the main shrinkage direction was MD.
The obtained heat shrinkable multilayer film was 50 $\mu$m in thickness in total and had a five-layer structure of front or back layer (6 $\mu$m) /adhesive layer (1 $\mu$m) /interlayer (36 $\mu$m) /adhesive layer (1 $\mu$m) /front or back layer (6 $\mu$m).

(Examples 2 to 18)

A five-layer heat shrinkable multilayer film was obtained in the same manner as in Example 1 except that the resins and the production conditions were as shown in Table 2.

(Comparative Examples 1 to 8)

A five-layer heat shrinkable multilayer film was obtained in the same manner as in Example 1 except that the resins and the production conditions were as shown in Table 3.

(Evaluation)

The respective heat shrinkable multilayer films obtained in the examples and the comparative examples were evaluated as follows. Table 2 and Table 3 show the results.

(1) Tensile elongation at break

The obtained heat shrinkable multilayer film was cut into a rectangle shape with a size of 10 mm (in MD) $\times$ 100 mm (in TD), and a line was drawn near the center in TD such that the gauge length was 40 mm. This was used as a measurement sample.
For this measurement sample, the tensile elongation (at break) in TD was measured using a tensile tester (Toyo Seiki Seisaku-sho, Ltd., Strograph VE1D) in accordance with JIS-K6732.
The chuck distance was the same as the gauge length, 40 mm. The gauge portions were sandwiched by the chucks, and the sample was stretched at a rate of 200 mm/min until the sample broke.

The tensile elongation at break was calculated based on the chuck distance before the test and the chuck distance at break. The test was performed 10 times, and the average value thereof was determined.

(2) Interlaminar strength (adhesion)

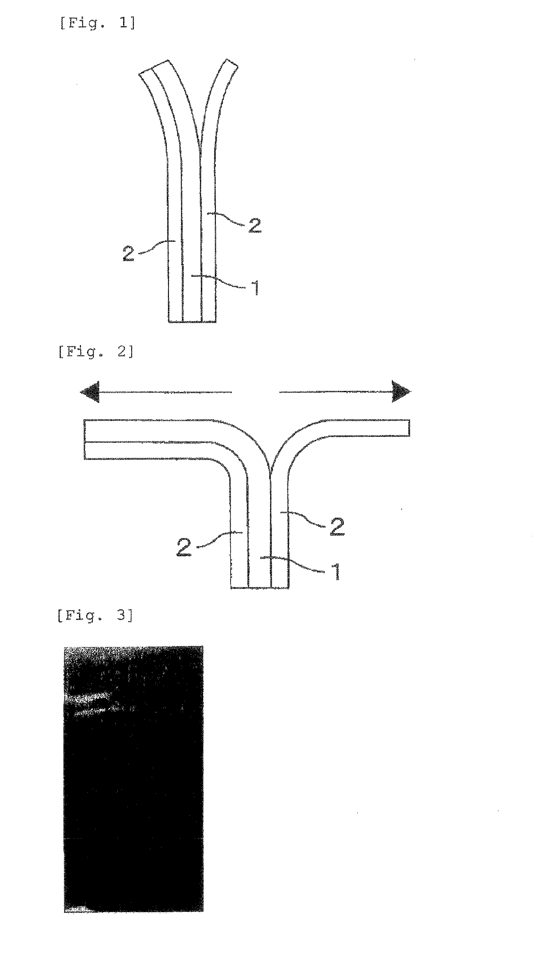

The heat shrinkable multilayer film was cut into a size of 100 mm (in length) × 10 mm (in width). Part of the film edge was delaminated as shown in Fig. 1, and the layers were separated in the 180° direction at a tensile speed of 200 mm/min in the longitudinal direction of the sample as shown in Fig. 2. The strength at this time was measured using a peel tester (Peeling Tester HEIDON-17, Shinto Scientific Co., Ltd.).
This test was performed 10 times in each of MD and TD, and the average values in MD and in TD were calculated.

(3) Evaluation on crease-whitening

A black image was printed on the obtained heat shrinkable multilayer film (film width: 500 mm) using Fine Star black (TOYO INK CO., LTD.), and then a white image was printed using Fine Star white (TOYO INK CO., LTD.), each by gravure printing. This provided a heat shrinkable multilayer film with a two-color-printed (black and white) back face. The printing plate was one produced by direct laser engraving with a plate depth of 30 μm and 175 lines.
After the gravure printing, the black-printed portion of the obtained heat shrinkable multilayer film was cut into a rectangle with a size of 100 mm (in MD) × 200 mm (in TD). This cutout sample was pressed two times by a rubber roller at a load of 2 kg in parallel to MD, so that a crease was formed. Then, the cutout sample was developed and pressed once by the rubber roller at a load of 2 kg, so that the crease was smoothed out. Thereafter, the film was immersed in a 75°C warm water for 7 seconds using a jig capable of controlling the shrinkage rate in TD, and thereby the film was shrunk 5% in TD. The appearance of the crease at this time was evaluated based on the following criteria. The appearance was evaluated as follows: light of a fluorescent lamp was applied onto the sample from the angle of 45°, and 10 persons visually observed the sample from the opposite side to the lamp at the angle of 45°.

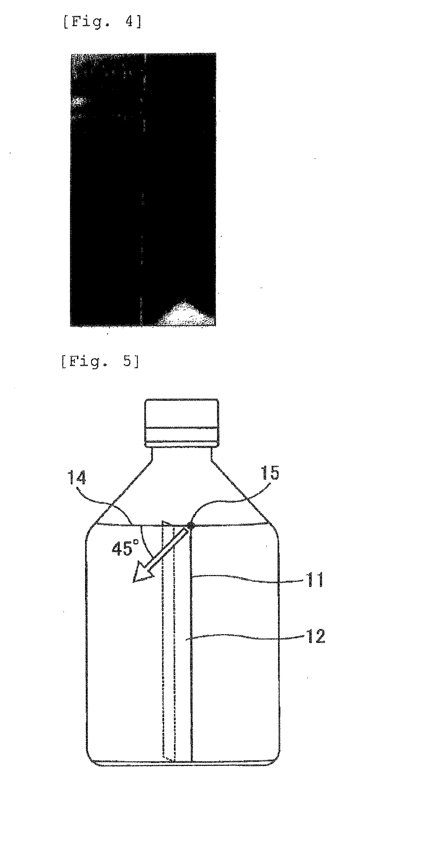

Fig. 3 shows one example where no crease-whitening was observed, and Fig. 4 shows one example where crease-whitening was observed.
○: None of the 10 persons observed crease-whitening.
x: One or more of the 10 persons observed crease-whitening.

(4) Scratch test

The obtained heat shrinkable multilayer film was slit to be 239 mm in width in TD. A 3-mm-width solvent-sealed portion was formed in parallel with MD using a solvent containing 40 parts by weight of cyclohexane for 100 parts by weight of 1, 4-dioxolane. The film was folded flat to be a tubular heat shrinkable label with a width in TD of 114 mm, and this tubular heat shrinkable label was cut to be 160 mm in width in MD. The label was heat-shrunk to cover a square (each side was about 60 mm in length) 500-mL PET bottle using a steam tunnel (SH-5000, Fuji Astec, Inc.) at a set temperature of 80°C, 85°C, and 95°C and at a tunnel transit time of eight seconds. This provided a container covered with a heat shrinkable label as shown in Fig. 5.
Thereafter, an upper end portion 15 on a film outside edge 11 of the heat shrinkable label was scratched by a nail at the angle of 45° from an upper end 14 such that a force is applied to the film outside edge 11 of a solvent-sealed overlapping portion 12. This operation was performed 10 times, and the number of cases suffering separation of seal portion or appearance failure was evaluated based on the following criteria.
◎: Neither separation of seal portion nor appearance failure was observed in all the 10 tests.
○: Separation or appearance failure was observed in one or two cases of the 10 tests.
Δ: Separation or appearance failure was observed in three or four cases of the 10 tests.
×: Separation or appearance failure was observed in five or more cases of the 10 tests.

(5) Evaluation on perforation aptness

A heat shrinkable label was produced by the same method as in "(4) Scratch test" except that two lines of perforations were previously formed in parallel with MD. Each line of perforations continuously had 0.5-mm torn portions and 3.0-mm untorn portions. The lines were 13 mm apart from each other such that the solvent-sealed portion is positioned as the center portion. Then, the label was attached to a PET bottle.

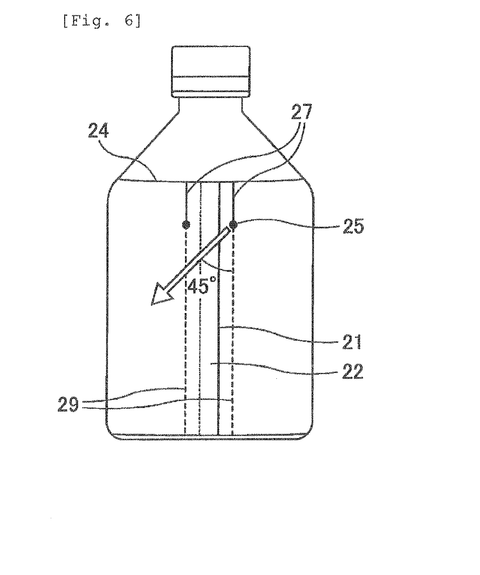

Next, the two lines of perforations of the heat shrinkable label covering the container were torn to the position 10 mm apart from an upper end 24 of the heat shrinkable label. This provided a container covered with the heat shrinkable label where the lines of perforations were torn to the position 10 mm apart from the upper end of the heat shrinkable label as shown in Fig. 6. Then, a force was applied to the perforations 29 from the lower end 25 of the previously torn portion 27 of the perforations at the angle of 45° such that the force was applied to a film outside edge 21 of a solvent-sealed overlapping portion 22, and thereby the perforations 29 were torn. The number of cases suffering delamination was evaluated based on the following criteria.

◎: No delamination from the seal portion was observed in all the 10 tests.
○: Delamination was observed in one or two cases of the 10 tests.
Δ: Delamination was observed in three or four cases of the 10 tests.
×: Delamination was observed in five or more cases of the 10 tests.

(6) Heat shrinkage rate

The obtained heat shrinkable multilayer film was cut into a size of 100 mm (in MD) × 100 mm (in TD) to prepare a sample. The sample was immersed in 70°C warm water for 10 seconds. The heat shrinkable multilayer film taken out of the warm water was immediately immersed in tap water for 10 seconds. The length L of one side along TD of the heat shrinkable multilayer film was measured, and the heat shrinkage rate in TD was calculated based on the following formula.

$$\text{Heat shrinkage rate (\%)} = \{(100-L)/100\} \times 100$$

This measurement was performed three times, and the shrinkage rate was the average value thereof. The measurement was also performed with 80°C warm water and with boiled water.

[Table 1]

| | | Acid component (mol%) | Diol component (mol%) | | | Styrene (% by weight) | Butadiene (% by weight) | Vicat softening temperature (°C) | MFR (g/10 min) |
|---|---|---|---|---|---|---|---|---|---|
| | | terephthalic acid | Ethylene glycol | Diethylene glycol | 1,4-Cyclohexane dimethanol | | | | |
| Polyester resin | PEs-1 | 100 | 68 | 2 | 30 | - | - | 85 | - |
| | PEs-2 | 100 | 65 | 20 | 15 | - | - | 69 | - |
| | PEs-3 | 100 | 50 | - | 50 | - | - | 87 | - |
| | PEs-4 | 100 | 69 | 11 | 20 | - | - | 71 | - |
| Polystyrene copolymer | SBS-1 | - | - | - | - | 78 | 22 | 72 | 6.2 |
| | SBS-2 | - | - | - | - | 80 | 20 | 75 | 6.7 |
| | SBS-3 | - | - | - | - | 80 | 20 | 76 | 7.5 |
| | SBS-4 | - | - | - | - | 72 | 28 | 72 | 6.1 |
| | SBS-5 | - | - | - | - | 76 | 24 | 82 | 5.3 |
| | SBS-6 | - | - | - | - | 86 | 14 | 77 | 5 |
| Polystyrene resin | PS-1 | - | - | - | - | 100 | 0 | 94 | 7.5 |
| Thermoplastic elastomer | TPE-1 | Polyester elastomer (PRIMALLOY A1600N, Mitsubishi Chemical Corp.) | | | | | | - | - |
| | TPE-2 | Hydrogenated styrene elastomer (Tuftec M1911, Asahi Kasei Chemicals Corp.) | | | | | | - | - |
| | TPE-3 | Styrene elastomer (Tufprene 126, Asahi Kasei Chemicals Corp.) | | | | | | - | - |
| | TPE-4 | Hydrogenated styrene elastomer (Tuftec H1041, Asahi Kasei Chemicals Corp.) | | | | | | - | - |
| | TPE-5 | Hydrogenatad styrene elastomer (Tuftec H1043, Asahi Kanei Chemicals Corp.) | | | | | | - | - |

[Table 2]

| | | | Examples | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| Constitutional resin (parts by weight) | Front and back layers | PEs-1 | 100 | – | – | – | – | – | – | – | 100 | 100 | – | 100 | – | – | – | 75 | 50 | 25 |
| | | PEs-2 | – | 100 | 100 | 100 | 100 | – | 100 | 100 | – | – | 100 | – | 100 | 100 | 100 | 25 | 50 | 75 |
| | | PEs-4 | – | – | – | – | – | 100 | – | – | – | – | – | – | – | – | – | – | – | – |
| | Interlayer | SBS-1 | 100 | – | – | – | – | – | – | – | 100 | – | – | 100 | 100 | – | – | – | – | – |
| | | SBS-2 | – | – | – | – | – | 100 | 100 | – | – | 100 | – | – | – | – | – | 100 | 100 | 100 |
| | | SBS-3 | – | 100 | 90 | 95 | 95 | – | – | 100 | – | – | 100 | – | – | 100 | 100 | – | – | – |
| | | TPE-3 | – | – | 10 | – | – | – | – | – | – | – | – | – | – | – | – | – | – | – |
| | | TPE-4 | – | – | – | 5 | – | – | – | – | – | – | – | – | – | – | – | – | – | – |
| | | TPE-5 | – | – | – | – | 5 | – | – | – | – | – | – | – | – | – | – | – | – | – |
| | Adhesive layer | PEs-1 | 85 | – | – | – | – | – | – | – | 70 | – | – | – | 70 | – | – | – | – | – |
| | | PEs-2 | – | 80 | 80 | 70 | 60 | 70 | 70 | – | 70 | – | – | – | 70 | 70 | 60 | 70 | 70 | 70 |
| | | PEs-3 | – | – | – | – | – | – | – | – | – | 70 | – | – | – | – | – | – | – | – |
| | | PEs-4 | – | – | – | – | – | – | – | – | – | – | 70 | – | – | – | – | – | – | – |
| | | SBS-4 | 15 | 20 | 20 | 30 | 40 | 30 | 30 | 30 | 30 | 30 | 30 | 30 | – | – | 40 | 30 | – | – |
| | | SBS-5 | – | – | – | – | – | – | – | – | – | – | – | – | 30 | – | – | – | – | – |
| | | SBS-6 | – | – | – | – | – | – | – | – | – | – | – | – | – | 30 | – | – | 30 | 30 |
| | | PS-1 | – | – | – | – | – | – | – | – | – | – | – | – | – | – | – | – | – | – |
| | | TPE-1 | – | – | – | – | – | – | – | – | – | – | – | – | – | – | – | – | – | – |
| | | TPE-2 | – | – | – | – | – | – | – | – | – | – | – | – | – | – | – | – | – | – |
| | | TPE-3 | – | – | – | – | – | – | – | – | – | – | – | – | – | – | – | – | – | – |
| | | TPE-4 | – | – | – | – | – | – | – | – | – | – | – | – | – | – | – | – | – | – |
| | | TPE-5 | – | – | – | – | – | – | – | – | – | – | – | – | – | – | – | – | – | – |
| Production conditions | Stretching rate (times) | | 5 | 6 | 6 | 6 | 6 | 6 | 6 | 5 | 5 | 5 | 6 | 4.5 | 6 | 5.5 | 6 | 5.5 | 5.5 | 6 |
| | Stretching temperature (°C) | Preheating | 105 | 100 | 100 | 100 | 100 | 100 | 100 | 98 | 105 | 105 | 100 | 105 | 100 | 98 | 100 | 102 | 102 | 102 |
| | | Stretching | 90 | 88 | 88 | 88 | 88 | 88 | 88 | 87 | 90 | 90 | 88 | 90 | 88 | 87 | 88 | 90 | 90 | 90 |
| | | Heat-setting | 87 | 75 | 75 | 75 | 75 | 75 | 75 | 75 | 87 | 87 | 75 | 87 | 75 | 75 | 75 | 75 | 85 | 85 |
| Evaluation | Interlaminar strength (g/cm) | | 60 | 96 | 98 | 100 | 92 | 95 | 92 | 88 | 85 | 83 | 88 | 75 | 85 | 87 | 84 | 85 | 90 | 92 |
| | Tensile elongation at break (%) | | 38 | 47 | 53 | 50 | 51 | 43 | 48 | 66 | 38 | 40 | 47 | 45 | 45 | 57 | 47 | 32 | 40 | 41 |
| | Scratch test | | O | ◎ | ◎ | ◎ | O | ◎ | ◎ | ◎ | O | O | ◎ | ◎ | O | O | O | O | ◎ | ◎ |
| | Perforation aptness | | O | ◎ | ◎ | ◎ | △ | ◎ | ◎ | ◎ | O | O | ◎ | ◎ | O | O | △ | △ | O | O |
| | Fold-line whitening (crease whitening) | | O | O | O | O | O | O | O | O | O | O | O | O | O | O | O | O | O | O |
| | Shrinkage ratio | 70°C | 39 | 38 | 37 | 36 | 39 | 38 | 36 | 37 | 34 | 35 | 38 | 23 | 23 | 24 | 23 | 22 | 23 | 22 |
| | | 80°C | 64 | 64 | 63 | 63 | 64 | 64 | 62 | 64 | 64 | 63 | 63 | 60 | 61 | 61 | 61 | 62 | 61 | 60 |
| | | Boiled water | 79 | 80 | 79 | 77 | 79 | 79 | 78 | 78 | 78 | 79 | 78 | 76 | 77 | 77 | 77 | 77 | 76 | 76 |

[Table 3]

| | | | Comparative Examples | | | | | | | |
|---|---|---|---|---|---|---|---|---|---|---|
| | | | 1 | 2 | 3 | 4 | 5 | 6 | 7 | 8 |
| Constitutional resin | Front and back layers | Peps-1 | 100 | 100 | - | - | - | 100 | 100 | 75 |
| | | PEs-2 | - | - | 100 | 100 | 100 | - | - | 25 |
| | | PEs-4 | - | - | - | - | - | - | - | - |
| | Interlayer | SBS-1 | - | 100 | - | - | - | 100 | 100 | 100 |
| | | SIS-2 | 100 | - | - | - | - | - | - | - |
| | | SBS-3 | - | - | 100 | 100 | 100 | - | - | - |
| | | TPE-3 | - | - | - | - | - | - | - | - |
| | | TPE-4 | - | - | - | - | - | - | - | - |
| | | TPE-5 | - | - | - | - | - | - | - | - |
| | | PEs-1 | 80 | 90 | - | - | - | - | - | - |

(continued)

|  |  |  | Comparative Examples | | | | | | | |
|---|---|---|---|---|---|---|---|---|---|---|
|  |  |  | 1 | 2 | 3 | 4 | 5 | 6 | 7 | 8 |
| (parts by weight) | Adhesive layer | PEs-2 | - | - | 50 | 70 | 70 | - | - | 70 |
|  |  | PEs-3 | - | - | - | - | - | - | - | - |
|  |  | PEs-4 | - | - | - | - | - | - | - | - |
|  |  | SBS-4 | 20 | 10 | 50 | - | - | - | - | - |
|  |  | SBS-5 | - | - | - | - | - | - | - | - |
|  |  | SBS-6 | - | - | - | - | - | - | - | 30 |
|  |  | PS-1 | - | - | - | - | 30 | - | - | - |
|  |  | TPE-1 | - | - | - | - | - | 100 | - | - |
|  |  | TPE2 | - | - | - | - | - | - | 100 | - |
|  |  | TPE-3 | - | - | - | 30 | - | - | - | - |
|  |  | TPE-4 |  | - | - | - | - | - | - | - |
|  |  | TPE-5 | - | - | - | - | - | - | - | - |
| Production conditions | Stretching rate (times) | | 6 | 5 | 6 | 6 | 6 | 5 | 5 | 6 |
|  | Stretching temperature (°C) | Preheating | 110 | 105 | 100 | 100 | 100 | 105 | 105 | 102 |
|  |  | Stretching | 92 | 90 | 88 | 88 | 88 | 90 | 90 | 90 |
|  |  | Heat-setting | 88 | 87 | 75 | 75 | 75 | 87 | 87 | 85 |
| Evaluation | Interlaminar strength (g/cm) | | 77 | 40 | 35 | 43 | 32 | 130 | 110 | 80 |
|  | Tensile elongation at break (%) | | 23 | 35 | 48 | 46 | 46 | 44 | 45 | 27 |
|  | Scratch test | | Δ | × | Δ | Δ | × | ◎ | × | ○ |
|  | Perforation aptness | | × | Δ | × | × | × | ◎ | × | × |
|  | Fold-tine whitening (crease whitening) | | ○ | ○ | ○ | ○ | ○ | × | ○ | ○ |
|  | Shrinkage ratio | 70°C | 20 | 23 | 39 | 38 | 38 | 21 | 22 | 26 |
|  |  | 80°C | 56 | 62 | 63 | 63 | 63 | 60 | 61 | 63 |
|  |  | Boiled water | 76 | 77 | 79 | 78 | 78 | 74 | 75 | 77 |

INDUSTRIAL APPLICABILITY

The present invention can provide a heat shrinkable multilayer film excellent in crease-whitening resistance and perforation aptness as well as excellent in low-temperature  shrinkability. The present invention can also provide a heat shrinkable label formed from the heat shrinkable multilayer film.

REFERENCE SIGNS LIST

1: interlayer
2: front and back layers
11, 21: film outside edge
12, 22: solvent-sealed overlapping portion

14, 24: upper end of heat shrinkable label
15: upper end portion of film outside edge 11
27: torn portion of perforations
29: perforations

**Claims**

1. A heat shrinkable multilayer film, comprising:

   front and back layers each containing a polyester resin;
   an interlayer containing a polystyrene copolymer; and
   adhesive layers each containing 60 to 85% by weight of a polyester resin and 15 to 40% by weight of a polystyrene copolymer,
   the front and back layers and the interlayer being stacked with the adhesive layers interposed therebetween, and
   the multilayer film having a tensile elongation at break of 30% or higher in the main shrinkage direction.

2. The heat shrinkable multilayer film according to claim 1,
   wherein the polyester resin in the adhesive layers have a Vicat softening temperature of 50 to 95°C.

3. The heat shrinkable multilayer film according to claim 1,
   wherein the polystyrene copolymer in the adhesive layers is an aromatic vinyl hydrocarbon-conjugated diene copolymer, and the copolymer contains 10 to 45% by weight of a conjugated diene.

4. The heat shrinkable multilayer film according to claim 1, 2, or 3,
   wherein the polyester resin in the front and back layers has a Vicat softening temperature of 55 to 95°C.

5. The heat shrinkable multilayer film according to claim 1, 2, 3, or 4,
   wherein the polystyrene copolymer in the interlayer has a Vicat softening temperature of 60 to 85°C.

6. A heat shrinkable label comprising the heat shrinkable multilayer film according to claim 1, 2, 3, 4, or 5.

[Fig. 1]

[Fig. 2]

[Fig. 3]

[Fig. 4]

[Fig. 5]

[Fig. 6]

<table>
<tr><td colspan="2" align="center">**INTERNATIONAL SEARCH REPORT**</td><td>International application No.<br>PCT/JP2011/079677</td></tr>
</table>

A. CLASSIFICATION OF SUBJECT MATTER
*B32B27/30*(2006.01)i, *B32B27/36*(2006.01)i, *B65D65/40*(2006.01)i

According to International Patent Classification (IPC) or to both national classification and IPC

B. FIELDS SEARCHED

Minimum documentation searched (classification system followed by classification symbols)
B32B1/00-43/00, B29C55/00-55/30, B29C61/00-61/10, B65D65/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-241055 A (Mitsubishi Plastics, Inc.),<br>28 October 2010 (28.10.2010),<br>claims 1, 3; paragraphs [0051], [0058], [0111],<br>[0133]; example 1<br>(Family: none) | 1-6 |
| Y | JP 2007-160543 A (Mitsubishi Plastics, Inc.),<br>28 June 2007 (28.06.2007),<br>claims 1, 6; paragraphs [0092], [0093], [0139]<br>(Family: none) | 1-6 |
| Y<br>A | JP 2009-000898 A (Gunze Ltd.),<br>08 January 2009 (08.01.2009),<br>claims 1, 2; paragraphs [0016], [0017], [0072]<br>(Family: none) | 2,4,5<br>1,3,6 |

☒ Further documents are listed in the continuation of Box C.　　☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>02 March, 2012 (02.03.12) | Date of mailing of the international search report<br>13 March, 2012 (13.03.12) |
|---|---|
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/079677

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2006-159903 A  (Mitsubishi Plastics, Inc.),<br>22 June 2006 (22.06.2006),<br>claims 1, 5, 8; paragraphs [0060] to [0061],<br>[0107]<br>(Family: none) | 5<br>1-4,6 |
| A | JP 2010-264657 A  (Mitsubishi Plastics, Inc.),<br>25 November 2010 (25.11.2010),<br>claim 1; paragraphs [0133], [0148]<br>(Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062640 A
- JP 2001030439 A